# EUROPEAN PATENT APPLICATION

(11) **EP 4 622 251 A1**
(43) Date of publication of application: **24.09.2025**
(21) Application number: 23891433.7
(22) Date of filing: 08.11.2023
(51) Int. Cl.: H04N 9/73

(54) **VIDEO SIGNAL ADJUSTMENT METHOD, VIDEO SYSTEM AND PROGRAM**

(30) Priority: 15.11.2022 JP 2022182502
(71) Applicant: Panasonic Intellectual Property Management Co., Ltd., Kadoma-shi, Osaka 571-0057 (JP)
(72) Inventor: UEYAMA, Kohei, Kadoma-shi, Osaka 571-0057 (JP)
(74) Representative: Novagraaf International SA
(86) International application number: PCT/JP2023/040152
(87) International publication number: WO 2024/106281

(57) **Abstract**

It is an object of the present invention to be able to intuitively recognize how the color properties of a video change as a result of adjustment in a case where a specific adjustment item has been adjusted. A video signal adjustment method includes displaying an adjustment-use GUI (200) having an adjustment unit configure to adjust color information about a video, and a chart display unit (202) configured to display, in a form of a chart, states of the color elements that can constitute the video; adjusting the color information by operating the adjustment-use GUI (200); changing a display state of a portion of the chart displayed on the chart display unit (202) that corresponds to a color element whose state has changed as a result of the adjustment of color information, in a case where an operation has been performed on the adjustment unit; and correcting the video signal according to the adjusted color information.

## Description

### TECHNICAL FIELD

The present invention relates to a video signal adjustment method for adjusting a video signal that constitutes a video, and to a video system, and a program that causes a computer to execute a video signal adjustment method.

### BACKGROUND ART

In a device that outputs to an external device a video signal constituting a video acquired by an image sensor or the like, the color of the image acquired by the image sensor or the like is adjusted, and the video signal (a signal representing the color of the image) is corrected accordingly and output to the outside. Adjusting the color of the video can be accomplished, for example, by an operation such as making a specific color stand out in the video. The color of a video has been adjusted in recent years using a GUI (graphical user interface). For example, it is known that the saturation of an image to be printed by a printer can be adjusted on a GUI that displays a graph representing the characteristics of the saturation (see Patent Literature 1, for example).

A conventional GUI for adjusting the color of a video only has a GUI known as a "slider" that is provided for each color adjustment item. A slider is a GUI for adjusting the value of a corresponding adjustment item by moving a knob in the length direction of the slider. With a conventional GUI, it is difficult to intuitively recognize how the color characteristics of the video as a whole change when a specific color is adjusted with a slider.

### [Prior Art Literature]

### [Patent Literature]

[Patent Literature 1] Japanese Laid-open Patent Publication 2006-157162

### DISCLOSURE OF THE INVENTION

### [Problems to be Solved by the Invention]

It is an object of the present invention to be able to intuitively recognize how the color properties of a video change as a result of adjustment in a case where a specific adjustment item is adjusted.

### [Means for Solving Problems]

The video signal adjustment method of the present invention is a method for adjusting a video signal that constitutes a video. This video signal adjustment method includes:
- displaying an adjustment-use GUI. The adjustment-use GUI has an adjustment unit that is configured to adjust color information related to the color of the video, and a chart display unit that is configured to display, in a form of a chart, states of a plurality of color elements that can constitute the video.
- adjusting color information by operating the adjustment-use GUI.
- in a case where an operation is performed on the adjustment unit, changing a display state of a part of the chart displayed on the chart display unit that corresponds to a color element whose state changes as a result of the adjustment of the color information.
- correcting the video signal according to the adjusted color information.

The video system of the present invention is a system configured to adjust a video signal that constitutes a video. This video system includes a display device, an input device, and an image processing device. The display device is configured to display an adjustment-use GUI. The adjustment-use GUI has an adjustment unit that is configured to adjust color information related to the color of the video, and a chart display unit that is configured to display states of a plurality of color elements that can constitute the video, in a form of a chart. The input device is configured to accept an operation to adjust the color information on the adjustment-use GUI. The image processing device is configured to correct the video signal according to the color information adjusted using the input device. In this video system, in a case where an operation is performed on the adjustment unit, a display state of a part of the chart displayed on the chart display unit that corresponds to a color element whose state changes as a result of the adjustment of the color information is changed in response to the operation on the adjustment unit.

### [Effects of Invention]

With the video signal adjustment method and video system disclosed herein, an adjustment-use GUI that is configured to adjust color information related to the color of a video is provided with a chart display unit that is configured to display, in the form of the chart, the states of a plurality of color elements that can constitute the video, in addition to an adjustment unit that is configured to adjust the color information. In a case where the operation to adjust the color information is performed by the adjustment unit on this adjustment-use GUI, the display state of the part of the chart displayed on the chart display unit that corresponds to a color element whose state changes as a result of the adjustment of the color information is changed according to the operation of the adjustment unit. In the present invention, when the color information is adjusted by the operation of the adjustment unit, the display state of the chart changes accordingly, which allows the user to intuitively and visually recognize how the color characteristics of the video (that is, the states of the color elements that can constitute the video) change as a result of the adjustment of the color information by the operation of the adjustment unit.

### BRIEF DESCRIPTION OF DRAWINGS

Fig. 1 is a diagram of the configuration of a video system;
Fig. 2 is a diagram of the configuration of a video acquisition device;
Fig. 3 is a diagram showing a flow of a video signal in an image processing unit;
Fig. 4 is a diagram showing an example of the configuration of an adjustment-use GUI when adjusting color phase and/or saturation;
Fig. 5 is a diagram showing another example of the configuration of an adjustment-use GUI when adjusting color phase and/or saturation;
Fig. 6 is a diagram showing an example of an adjustment-use GUI when adjusting the degree of color correction of a video;
Fig. 7 is a diagram showing another example of an adjustment-use GUI when adjusting the degree of color correction of a video;
Fig. 8 is a flowchart of a video signal adjustment operation;
Fig. 9 is a diagram showing an example of the display state of a chart that has changed due to an operation of a third adjustment unit; and
Fig. 10 is a diagram showing an example of the display state of a chart that has changed due to the operation of a first adjustment unit and a second adjustment unit.

### DESCRIPTION OF EMBODIMENTS

Embodiments will now be described with reference to the drawings as needed. However, some unnecessarily detailed description may be omitted. For example, detailed description of already known facts or redundant description of components that are substantially the same may be omitted. This is to avoid unnecessary repetition in the following description, and facilitate an understanding on the part of a person skilled in the art. The applicant has provided the appended drawings and the following description so that a person skilled in the art might fully understand this disclosure, but does not intend for these to limit what is discussed in the patent claims.

### 1. Video System

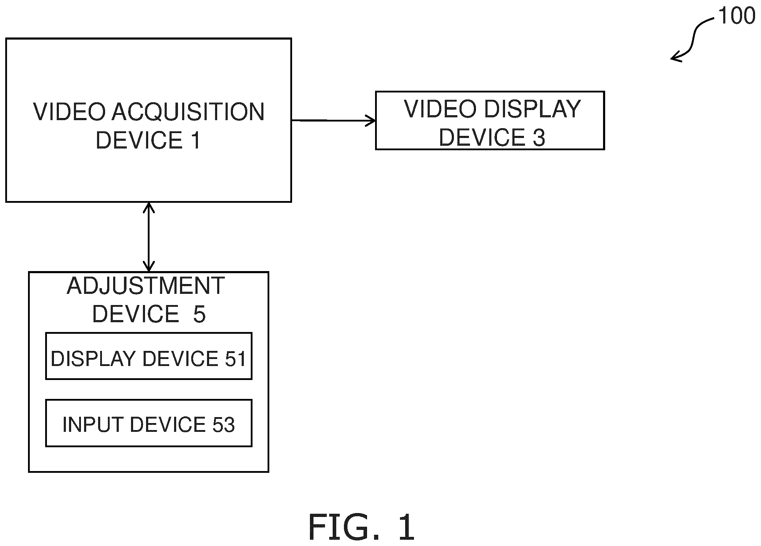

The video system 100 according to the present invention will now be described with reference to the drawings. The video system 100 acquires a specific video, adjusts the acquired video, and outputs the resulting video. The configuration of the video system 100 will be described with reference to Fig. 1. Fig. 1 is a diagram of the configuration of the video system 100. The video system 100 includes a video acquisition device 1, a video display device 3, and an adjustment device 5.

The video acquisition device 1 is configured to acquire video data (including video and audio data) and outputs this data to the video display device 3. The video acquisition device 1 may be a camera system or a media server. In this disclosure, the video acquisition device 1 is a camera. The video data acquired by the video acquisition device 1 may be still picture data or moving picture data.

The video display device 3 is a device that is configured to display video data input from the video acquisition device 1. The video display device 3 is a display device such as a liquid crystal display, an organic EL display, a plasma display, or the like, or a device that can display the video data, such as a computer, a tablet terminal, or a mobile terminal, or the like, for example. Also, the video display device 3 may be capable of storing the video data input from the video acquisition device 1.

The adjustment device 5 is configured to make adjustments related to the video acquired by the video acquisition device 1. The adjustment device 5 has a display device 51 and an input device 53. The display device 51 is configured to display an adjustment-use GUI 200 provided from the video acquisition device 1. The adjustment-use GUI 200 is a GUI for making adjustments related to the video acquired by the video acquisition device 1. The display device 51 is a liquid crystal display, an organic EL display, a plasma display, or another such display device, for example.

The input device 53 is configured to accept user's operations on the adjustment-use GUI 200. The input device 53 is, for example, a keyboard, a mouse, a touch panel, a specific operation panel, or another such input device. The adjustment device 5 is, for example, a specific terminal such as a personal computer, a tablet terminal, etc.

### 2. Video Acquisition Device

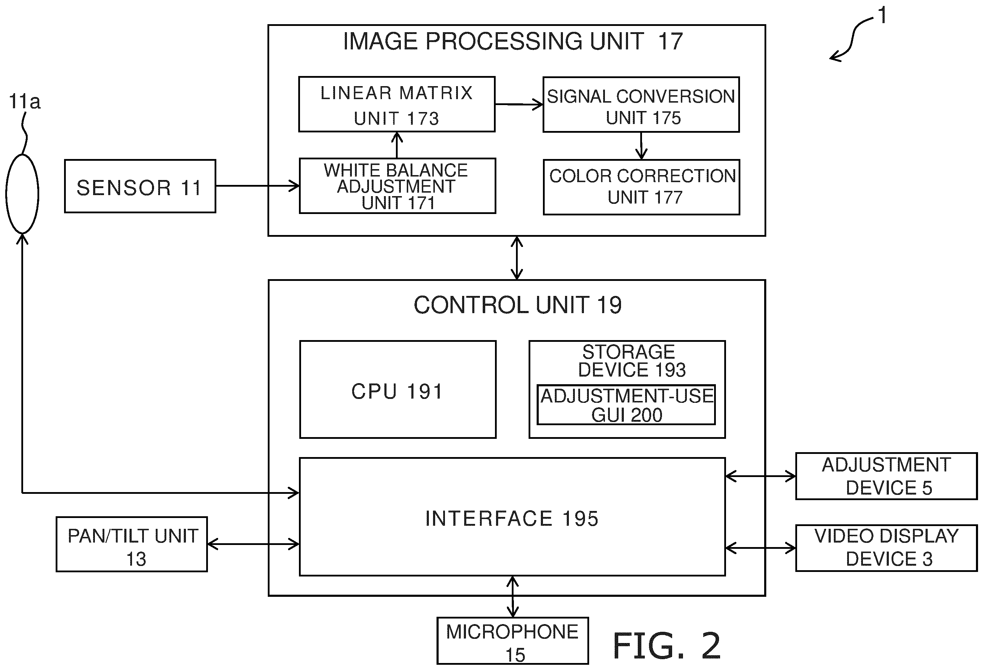

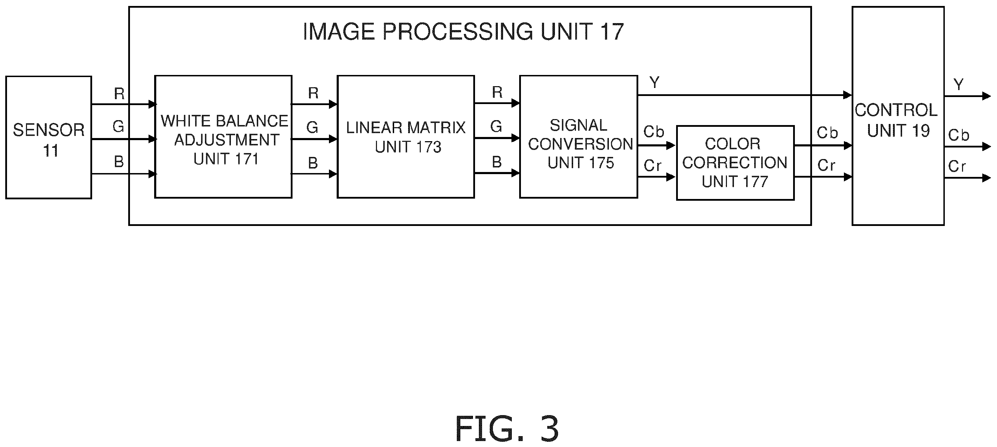

The configuration of the video acquisition device 1 will be described with reference to Figs. 2 and 3. Fig. 2 is a diagram of the configuration of the video acquisition device 1. Fig. 3 is a diagram showing the flow of a video signal in the image processing unit 17. The video acquisition device 1 has a sensor 11, a pan/tilt unit 13, a microphone 15, an image processing unit 17, and a control unit 19.

The sensor 11 is configured to acquire a video of an external space through a lens 11a, and outputs this to the image processing unit 17. The sensor 11 is, for example, a CMOS, a CCD, or another such image sensor. The video obtained by the sensor 11 is made up of RGB signals (an example of a video signal). An RGB signal is a signal that determines the colors of the dots of the pixels that make up a video, and includes an R signal representing the intensity of red, a G signal representing the intensity of green, and a B signal representing the intensity of blue. The lens 11a is configured to move based on a control signal transmitted from the control unit 19. That is, the focal position and zoom position of the lens 11a can be adjusted under the control of the control unit 19.

The pan/tilt unit 13 is configured to adjust the orientation (pan and tilt) of the camera portion constituted by the sensor 11 and the lens 11a under the control of the control unit 19. The pan/tilt unit 13 varies the orientation of the camera portion by driving a servo motor, for example.

The microphone 15 is configured to acquire, as audio data, sounds in the target external space where the video was acquired. The audio data acquired by the microphone 15 is output to the control unit 19. The control unit 19 outputs the video acquired by the sensor 11 and the audio data acquired by the microphone 15 to the outside as video data.

The image processing unit 17 is an image signal processor (ISP) that is configured to perform specific image processing on the video acquired by the sensor 11. The image processing unit 17 mainly has a white balance adjustment unit 171, a linear matrix unit 173, a signal conversion unit 175, and a color correction unit 177.

The white balance adjustment unit 171 is a circuit that is configured to adjust the color temperature of the video acquired by the sensor 11, and correcting the RGB signals constituting the video acquired by the sensor 11 according to the adjusted color temperature.

The linear matrix unit 173 is a circuit that is configured to further correct the RGB signals output from the white balance adjustment unit 171. More specifically, the linear matrix unit 173 performs a specific matrix calculation on the RGB signals from the white balance adjustment unit 171 to correct the RGB signals. The values of the elements of the matrix used in this matrix calculation represent the degree of correction of the RGB signals. Correcting the RGB signals with the linear matrix unit 173 allows the spectral sensitivity of the sensor 11 (the sensitivity of the sensor 11 for each color) to be adjusted.

The signal conversion unit 175 is configured to convert the RGB signals output from the linear matrix unit 173 into YCrCb signals. A YCrCb signal is a signal that determines the color of each dot that constitutes a video, and includes a Y signal representing the intensity of luminance, a Cr signal representing the color phase and saturation (color difference) of the red color family, and a Cb signal representing the color phase and saturation (color difference) of the blue color family. Of the YCrCb signal, the Cr signal and the Cb signal are called color difference signals. The signal conversion unit 175 generates a YCrCb signal by applying a specific matrix calculation to an RGB signal from the linear matrix unit 173. The conversion from RGB signal to YCrCb signal may be performed in accordance with the international standard called ITU-R BT.709.

The color correction unit 177 is configured to correct the color difference signals by performing a specific matrix calculation on the color difference signals (Cr signal and Cb signal) output from the signal conversion unit 175. The value of each element in the matrix used in this matrix calculation represents the degree of correction of the color difference signals. The color of the video can be adjusted by correcting the color difference signals with the color correction unit 177. The color difference signals corrected by the color correction unit 177 are transmitted to the control unit 19 to display the video on the video display device 3. The Y signal outputted from the signal conversion unit 175 is not corrected by the color correction unit 177, and is instead transmitted directly to the control unit 19.

The image processing unit 17 may also include circuits that are configured to perform other video processing besides what is described above. More specifically, the image processing unit 17 may also include circuits that are configured to perform "detail (sharpness)" correction to adjust the degree of emphasis of the edges in a video, γ correction related to the gradation of a video, knee correction related to the gradation of high-luminance portions of a video, gain correction related to the output from the sensor 11, and so on.

The control unit 19 is configured to control the video acquisition device 1. The control unit 19 has a CPU 191, a storage device 193, and an interface 195. The CPU 191 is configured to perform information processing related to the various functions executed by the control unit 19. More specifically, the control unit 19 controls the image processing unit 17 and the operation of the lens 11a, the pan/tilt unit 13, and the microphone 15.

Also, the control unit 19 provides the adjustment-use GUI 200 to the adjustment device 5, and executes adjustment related to the color of the video using the adjustment device 5. The control unit 19 outputs the adjustment result related to the color set using the adjustment-use GUI 200 to the image processing unit 17. Also, the control unit 19 outputs to the video display device 3 the video signal (YCrCb signal) outputted from the image processing unit 17.

The storage device 193 includes a RAM, a ROM, a hard disk, and an SSD, for example. The storage device 193 is configured to store programs executed by the control unit 19, various parameters, and the like. The storage device 193 stores the adjustment-use GUI 200. The adjustment-use GUI 200 is a user interface that is configured to make adjustments related to the color of the video acquired by the sensor 11. The adjustment-use GUI 200 is provided to the adjustment device 5 when making adjustments related to the color of the video. That is, adjustments related to the color of the video are made using the adjustment device 5 via the adjustment-use GUI 200.

The interface 195 connects the video acquisition device 1 to an external device. The pan/tilt unit 13 and the microphone 15 are connected to the interface 195. The video display device 3 that displays video data (video and audio data) acquired by the video acquisition device 1 is also connected to the interface 195. The adjustment device 5 that is used in adjusting the color of the video is also connected to the interface 195.

The interface 195 has, for example, a serial communication interface, a network interface, a USB (Universal Serial Bus) interface, an HDMI (High Definition Multimedia Interface) (registered trademark) interface, an SDI (Serial Digital Interface) interface, a GenLock input (GenLock IN) interface, and an Ethernet (registered trademark) terminal such as a LAN or WAN.

The video display device 3 is connected to an interface that is configured to output a video signal, such as an HDMI (registered trademark) interface or an SDI interface, a network interface, or the like. Meanwhile, the adjustment device 5 is connected to an interface that transmits and receives data, such as a network interface, a USB interface, or a serial communication interface.

### 3. Adjustment-use GUI

### 3-1. Basic Configuration of Adjustment-use GUI

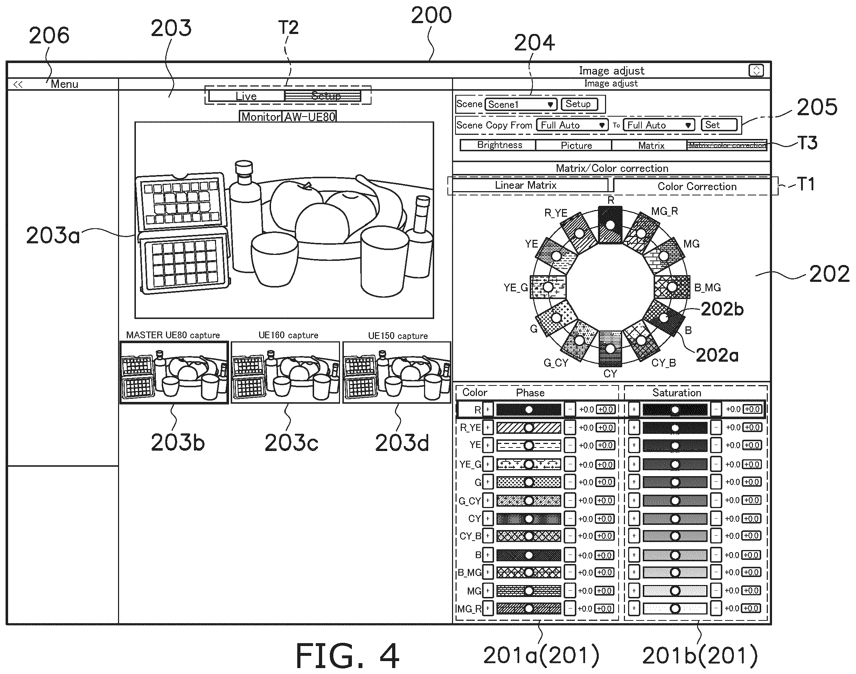

The adjustment-use GUI 200 will be described in detail below. The adjustment-use GUI 200 can execute adjustment of the color phase and/or saturation of color elements that can constitute a video, and adjustment of the degree of color correction of the video acquired by the sensor 11. First, the basic configuration of the adjustment-use GUI 200 will be described with reference to Fig. 4. Fig. 4 is a diagram showing an example of the configuration of the adjustment-use GUI 200 when adjusting color phase and/or saturation.

The adjustment-use GUI 200 mainly has an adjustment unit 201, a chart display unit 202, and a preview unit 203. The adjustment unit 201 is a GUI that is configured to adjust color information related to the color of a video.

The chart display unit 202 is configured to display, in a form of a chart, states of each of a plurality of color elements that can constitute a video, based on the color information adjusted by the adjustment unit 201. That is, the chart displayed on the chart display unit 202 has a shape that reflects the state of the color information produced by the adjustment unit 201. When an operation is performed on the adjustment unit 201, the display state of at least part of the chart displayed on the chart display unit 202 changes accordingly. More specifically, the color information is changed by an operation of the adjustment unit 201, and this changes the display state of the chart portion corresponding to the color element whose state has changed.

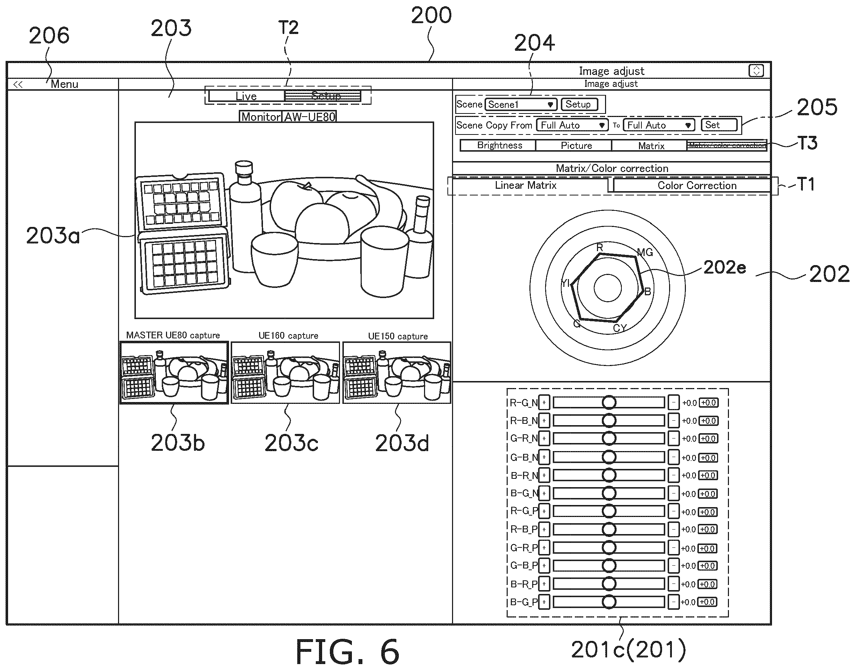

The chart display unit 202 is provided with a first tab T1. When an operation is performed on the first tab T1, the display state of the adjustment-use GUI 200 is switched between a display state for adjusting the color phase and/or saturation of the color elements, and a display state for adjusting the degree of correction of the color of the video acquired by the sensor 11. More specifically, for example, if "color correction" is selected on the first tab T1, the display state of the adjustment-use GUI 200 becomes a display state for adjusting the color phase and/or saturation of the color elements (Fig. 4). On the other hand, when "linear matrix" is selected on the first tab T1, the display state of the adjustment-use GUI 200 becomes a display state for adjusting the degree of correction of the color of the video acquired by the sensor 11 (Fig. 6).

The preview unit 203 is provided with a second tab T2. The second tab T2 can be switched between a "live" mode and a "setup" mode. In Fig. 4, the "setup" mode is selected.

When "setup" is selected on the second tab T2, the adjustment unit 201 and the chart display unit 202 are displayed in the adjustment-use GUI 200. A video reflecting the result of adjusting the color information performed using the adjustment unit 201 is displayed on the preview unit 203. This allows the user to confirm how the video will actually be displayed after the adjustment of the color information. The preview unit 203 is provided with areas 203a-203d. Video captured by the camera being adjusted is displayed in a large size in the area 203a. When a plurality of cameras to be adjusted are connected to the adjustment device 5, video captured by other cameras that are candidates for adjustment are displayed in a small size in the other areas 203b-203d.

On the other hand, when "live" is selected on the second tab T2, an operation-use GUI for controlling the pan/tilt unit 13 and the lens 11a of the video acquisition device 1 is displayed instead of the adjustment unit 201 and the chart display unit 202. The user decides on the desired composition while operating the operation-use GUI and checking the live video acquired by the sensor 11 on the preview unit 203.

The adjustment-use GUI 200 is provided with a third tab T3. The third tab T3 is used to select what is to be adjusted using the adjustment-use GUI 200. More specifically, when "matrix/color correction" is selected on the third tab T3, the color phase and/or saturation of the color element and the degree of correction of the color of the video acquired by the sensor 11 are selected as the targets of adjustment. On the other hand, if "brightness" is selected on the third tab T3, for example, a GUI for adjusting the brightness of the video may be displayed at the position of the adjustment unit 201 and the chart display unit 202.

The adjustment-use GUI 200 further has a target scene selection unit 204, a scene copy unit 205, and a menu unit 206. The target scene selection unit 204 is configured to select a scene (file, for example) that reflects the current adjustment state of color information, etc. This allows a different adjustment state to be stored for each of a plurality of scenes. The scene copy unit 205 is configured to copy the adjustment state, etc., in a specific scene to another scene. The menu unit 206 is configured to display a list of other functions that can be executed by the adjustment-use GUI 200. This list of other functions is displayed when a specific operation (such as clicking a mouse, touching a touch panel, etc.) is performed on the menu unit 206.

### 3-2. Adjustment-use GUI for Adjusting Color Phase/Saturation

Next, the configuration of the adjustment-use GUI 200 when adjusting the color phase and/or saturation of the color elements that can constitute a video will be described with reference to Fig. 4. In adjusting the color phase and/or saturation of the color elements that can constitute a video, the adjustment unit 201 is provided with a first adjustment unit 201a and a second adjustment unit 201b.

The first adjustment unit 201a is made up of a plurality of sliders provided to each of a plurality of color elements (color elements represented by color difference signals) that can constitute a video. In the example shown in Fig. 4, there are 12 types of color element that can constitute a video, namely, red (R), an intermediate between red and yellow (R_YE), yellow (YE), an intermediate between yellow and green (YE_G), green (G), an intermediate between green and cyan (G_CY), cyan (CY), an intermediate between cyan and blue (CY_B), blue (B), an intermediate between blue and magenta (B_MG), magenta (MG), and an intermediate between magenta and red (MG_R). The number of color elements can be chosen as dictated by the application, etc. The first adjustment unit 201a is configured to adjust the color phase of corresponding color elements by moving the slider of those color elements in one direction. The color phase that can be adjusted with the slider may include 255 stages, from -127 to +127, for example. In this case, the color phase is zero when the knob is at the center of the slider. Each of these 12 color elements can be defined by varying the gradation of each of the three color elements R, G, and B. For example, in the case of red (R), R, G, and B can be varied between 255, 0, and 64 and 255, 64, and 0, respectively. For other colors, the R, G, and B elements have different gradations. For example, the gradations of R, G, and B in an intermediate of red and yellow (R_Y) are from 255, 64, and 0 to 255, 191, and 0, respectively. In this way, some adjacent color elements may have the same gradation. The gradations of R, G, and B that define the above 12 color elements are not limited to 256 gradations, and may instead be defined between 0% and 100%.

The second adjustment unit 201b is made up of a plurality of sliders provided for each of the 12 color elements that can form a video. The second adjustment unit 201b is configured to adjust the saturation of a corresponding color element by moving the slider of that corresponding color element in one direction. The manner in which the signal input to the color correction unit 177 of the image processing unit 17 is corrected will vary with the operation of the first adjustment unit 201a and the second adjustment unit 201b.

In adjusting the color phase and/or saturation, a chart having a plurality of color element boxes 202a is displayed on the chart display unit 202. The color element boxes 202a are provided corresponding to the 12 color elements that can constitute a video. As discussed above, in this embodiment, the number of color elements is 12, so the number of color element boxes 202a on the chart display unit 202 is also 12.

In the chart display unit 202, the plurality of color element boxes 202a are disposed around a circle. More specifically, the 12 color element boxes 202a are equidistantly disposed around a circle. Also, inside the color element boxes 202a are displayed markers 202b that are configured to move in response to the operation of the first adjustment unit 201a and the second adjustment unit 201b. This makes it easier for the user to intuitively confirm the adjustment state of the color elements, since the chart display unit 202 looks like a "color palette."

Each of the color element boxes 202a disposed in a circle is colored by the corresponding color element. For instance, if the color element is R, the color element box 202a is depicted in red. The coloring of the color element box 202a changes in color phase in the circumferential direction of the circle on which the color element boxes 202a are disposed, and changes in saturation in the radial direction of the circle on which the color element boxes 202a are disposed. More specifically, the color phase of the coloring increases as moving clockwise around the circumference of a color element box 202a, and the saturation of the coloring increases as moving away from the center of the circle in the radial direction.

Also, the position of the marker 202b within the color element box 202a is determined according to the color phase and saturation of the color element corresponding to the color element box 202a in which the marker 202b is disposed.

More specifically, for example, when the color phase of a particular color element is adjusted to the "+" side using the first adjustment unit 201a, the marker 202b in the color element box 202a corresponding to that color element moves clockwise. Consequently, the marker 202b moves to the saturation side having a greater color phase in the color element box 202a. On the other hand, when the color phase of a particular color element is adjusted to the "-" side using the first adjustment unit 201a, the marker 202b in the color element box 202a corresponding to that color element moves counterclockwise. Consequently, the marker 202b moves to the saturation side having a lesser color phase in the color element box 202a.

Thus, with the chart display unit 202, using the first adjustment unit 201a to adjust the color phase of a color element to the "+" side or the "-" side allows the user to intuitively and visually recognize how the phase of the color changes.

Also, when the saturation of a particular color element is adjusted to the "+" side using the second adjustment unit 201b, for example, the marker 202b in the color element box 202a corresponding to this color element moves away from the center of the circle. Consequently, the marker 202b moves to the higher saturation side in the color element box 202a. On the other hand, when the saturation of a particular color element is adjusted to the "-" side using the second adjustment unit 201b, the marker 202b in the color element box 202a corresponding to this color element moves toward the center of the circle. Consequently, the marker 202b moves to the lower saturation side in the color element box 202a.

Thus, with the chart display unit 202, adjusting the color phase of the color element to the "+" side or the "-" side using the second adjustment unit 201b allows the user to intuitively and visually recognize how the saturation of the color changes.

The display state of the chart in the chart display unit 202 (the position of the marker 202b) changes in response to the operation of the first adjustment unit 201a or the second adjustment unit 201b. That is, the display state of the chart changes almost simultaneously with the operation of the first adjustment unit 201a or the second adjustment unit 201b. This makes it possible to immediately confirm how the states of the plurality of color elements that can constitute a video (the color phase and saturation of each color element) change due to the operation of the first adjustment unit 201a and the second adjustment unit 201b.

With the adjustment-use GUI 200 shown in Fig. 4, the position of the marker 202b in the color element box 202a can also be changed by a user operation using the adjustment device 5. More specifically, the position of the marker 202b can be changed by dragging and dropping the marker 202b in the color element box 202a, for example. This allows the user to make adjustments with first adjustment unit 201a and the second adjustment unit 201b while looking at the coloring in the color element boxes 202a. The way in which the signal input to the color correction unit 177 of the image processing unit 17 is corrected also varies with how the position of the marker 202b in the color element box 202a is adjusted by the user.

When the position of the marker 202b is changed using the adjustment device 5, the color phase and/or saturation of the corresponding color element is changed accordingly, and the display state of the first adjustment unit 201a and/or the second adjustment unit 201b also changes. In this way, with the adjustment-use GUI 200 shown in Fig. 4, changing the position of the marker 202b allows the color phase and/or saturation of the corresponding color element to be changed, and allows the state of the first adjustment unit 201a and/or the second adjustment unit 201b to be automatically changed accordingly.

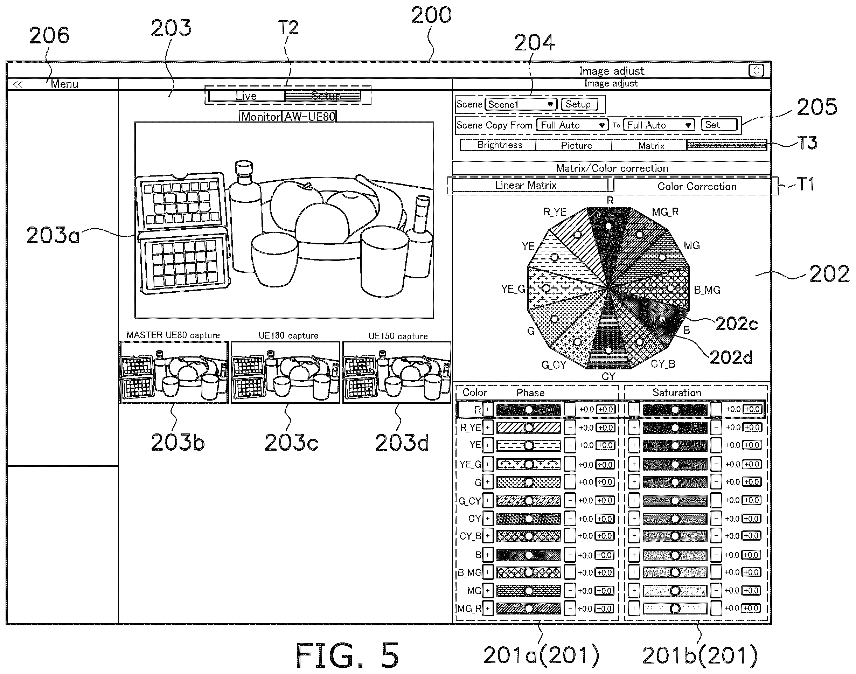

As another example of the adjustment-use GUI 200 when adjusting the color phase and/or saturation of a color element, as shown in Fig. 5, a plurality of color element boxes 202c each having an isosceles triangle shape may be disposed with two sides of equal length overlapping each other (that is, disposing the color element boxes 202c around a circle), and a marker 202d may be disposed in each of the color element boxes 202c. Fig. 5 is a diagram showing another example of the configuration of the adjustment-use GUI 200 when adjusting the color phase and/or saturation.

### 3-3. Adjustment-use GUI when Adjusting the Degree of Correction of Video Color

Next, the configuration of the adjustment-use GUI 200 when adjusting the degree of correction of the color of the video acquired by the sensor 11 will be described with reference to Fig. 6. Fig. 6 is a diagram showing an example of the adjustment-use GUI 200 when adjusting the degree of correction of the video color. In adjusting the degree of correction of the video color, the adjustment unit 201 is provided with a third adjustment unit 201c. The third adjustment unit 201c is made up of a number of sliders corresponding to the number of parameters (matrix elements) representing the degree of correction of the video color. In the example shown in Fig. 6, there are 12 types of parameter representing the degree of correction, namely, R-G_P, G-B_P, B-R_P, R-B_P, G-R_P, B-G_P, R-G_N, G-B_N, B-R_N, R-B_N, G-R_N, and B-G_N. The third adjustment unit 201c adjusts these parameters by moving the slider of the corresponding color element in one direction. The manner in which the signal input to the linear matrix unit 173 of the image processing unit 17 is corrected changes depending on the operation of the third adjustment unit 201c.

R-G_P is a parameter multiplied by the difference between the R signal (Rᵢₙ) and the G signal (Gᵢₙ) input to the linear matrix unit 173 when this difference is a positive value. R-G_N is a parameter multiplied by the difference between Rᵢₙ and Gᵢₙ when this difference is a negative value. G-B_P is a parameter multiplied by the difference between the G signal (Gᵢₙ) and the B signal (Bᵢₙ) input to the linear matrix unit 173 when this difference is a positive value. G-B_N is a parameter multiplied by the difference between Gᵢₙ and Bᵢₙ when this difference is a negative value. B-R_P is a parameter multiplied by the difference between Bᵢₙ and Rᵢₙ when this difference is a positive value. B-R_N is a parameter multiplied by the difference between Bᵢₙ and Rᵢₙ when this difference is a negative value.

R-B_P is a parameter multiplied by the difference between Rᵢₙ and B in when this difference is a positive value. R-B_N is a parameter multiplied by the difference between Rᵢₙ and Bᵢₙ when this difference is a negative value. G-R_P is a parameter multiplied by the difference between Gᵢₙ and Rᵢₙ when this difference is a positive value. G-R_N is a parameter multiplied by the difference between Gᵢₙ and Rᵢₙ when this difference is a negative value. B-G_P is a parameter multiplied by the difference between Bᵢₙ and Gᵢₙ when this difference is a positive value. B-G_N is a parameter multiplied by the difference between Bᵢₙ and Gᵢₙ when this difference is a negative value.

In adjusting the degree of correction of the video color, the chart display unit 202 displays a chart 202e that expresses the magnitude of the spectral sensitivity of the sensor 11. The chart 202e is in a form of a hexagon, with red (R), yellow (YI), green (G), cyan (CY), blue (B), and magenta (MG) as its vertices. When the third adjustment unit 201c is operated to change the above parameters and increase the spectral sensitivity, the sides and/or vertices of the chart 202e corresponding to the color with the increased spectral sensitivity move away from the center of the hexagon. On the other hand, when the spectral sensitivity decreases, the sides and/or vertices of the chart 202e corresponding to the color with the decreased spectral sensitivity move toward the center of the hexagon. When the above chart 202e is used to adjust the degree of correction of the color of the video input from the sensor 11, the user can visually and intuitively recognize for which color the spectral sensitivity of the sensor 11 has increased.

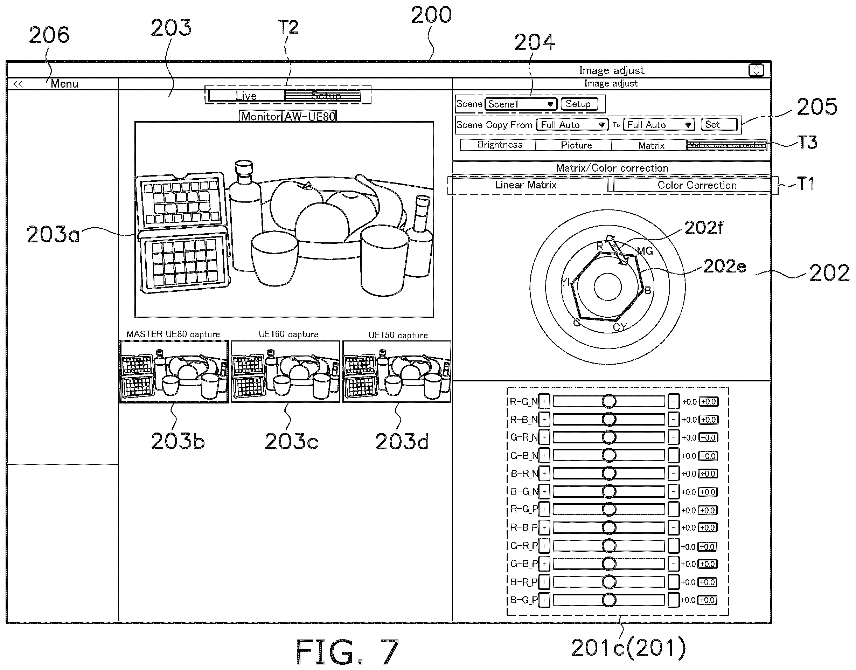

As shown in Fig. 7, when the third adjustment unit 201c is operated to change any of the above parameters in the adjustment-use GUI 200, an arrow 202f may indicate which part of the chart 202e changes its display state, that is, for which color the sensitivity of the sensor 11 changes. In the example shown in Fig. 7, when the parameter R-G_P is changed, the side connecting red (R) and magenta (MG) in the chart 202e (and red (R) and magenta (MG)) moves in the direction of the arrow 202f, that is, it is indicated that the sensitivity of the sensor 11 to red (R) and magenta (MG) changes. Also, the name of the parameter to be changed may be displayed inside the arrow 202f. Fig. 7 is a diagram showing another example of the adjustment-use GUI 200 when adjusting the degree of correction of the video color.

The display state of the chart 202e in the chart display unit 202 changes in response to operation of the third adjustment unit 201c. That is, the display state of the chart 202e changes almost simultaneously with an operation of the third adjustment unit 201c. This makes it possible to immediately confirm how the state of a plurality of color elements that can constitute a video (the spectral sensitivity of the sensor 11 to each color) changes after operation of the third adjustment unit 201c.

### 4. Video Signal Adjustment Operation

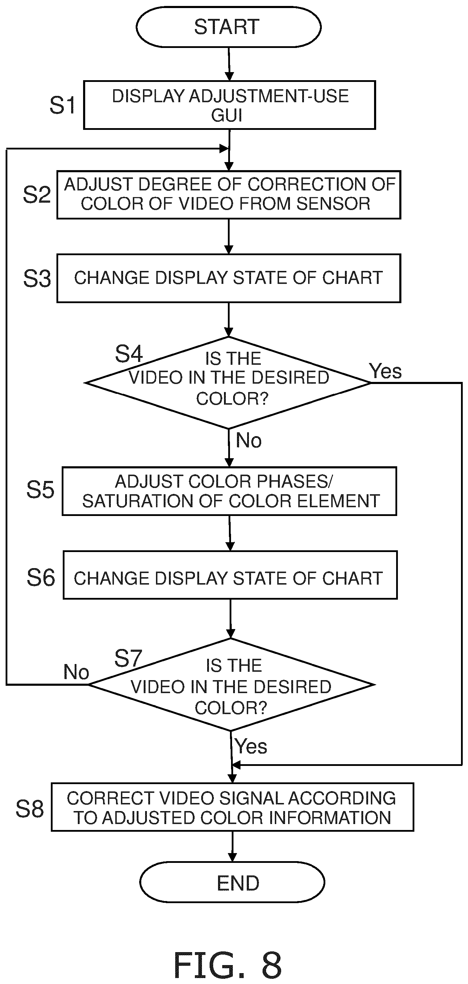

An operation to adjust the video signal in the above-mentioned video system 100 will now be described with reference to Fig. 8. Fig. 8 is a flowchart showing the video signal adjustment operation. The video signal is a signal representing the color of the video acquired by the video acquisition device 1. Therefore, in a video signal adjustment operation, first, color information related to the color of the video is adjusted so that the video is displayed in the color tone desired by the user. More specifically, the color information is adjusted as follows.

First, a user who wishes to adjust color information executes a specific program such as a web browser on the adjustment device 5 to access the video acquisition device 1. When the user accesses the video acquisition device 1 through the adjustment device 5, the control unit 19 of the video acquisition device 1 transmits the adjustment-use GUI 200 to the adjustment device 5. Upon receipt of the adjustment-use GUI 200, the adjustment device 5 displays the received adjustment-use GUI 200 on the display device 51 of the adjustment device 5 (step S1).

When the adjustment-use GUI 200 is displayed, the input device 53 of the adjustment device 5 becomes capable of accepting a user operation on the adjustment-use GUI 200. Once the input device 53 is able to accept a user operation on the adjustment-use GUI 200, the user adjusts color information using the adjustment device 5 on which the adjustment-use GUI 200 is displayed. For example, the user first adjusts the degree of color correction of the video output from the sensor 11 (step S2).

More specifically, first, the input device 53 is used to perform an operation (such as clicking a mouse or touching a touch panel) on the portion displayed as "Setup" on the second tab T2 of the adjustment-use GUI 200 (when "Setup" has not been selected in the second tab T2). As a result, the adjustment unit 201 and the chart display unit 202 are displayed. Next, the input device 53 is used to perform an operation (such as clicking a mouse or touching a touch panel) on the portion displayed as "Linear Matrix" on the first tab T1 of the adjustment-use GUI 200, and as shown in Fig. 6, the adjustment unit 201 of the adjustment-use GUI 200 displays the third adjustment unit 201c, and the chart display unit 202 displays the chart 202e. This makes it possible to adjust the degree of color correction of the video using the adjustment-use GUI 200.

Next, the user operates one of the sliders of the third adjustment unit 201c using the input device 53. For example, suppose that the slider for the parameter with R-G_P is moved in the "+" direction to increase the parameter value of R-G_P, and the slider for the parameter with B-G_N is moved in the "+" direction to increase the parameter value of B-G_N.

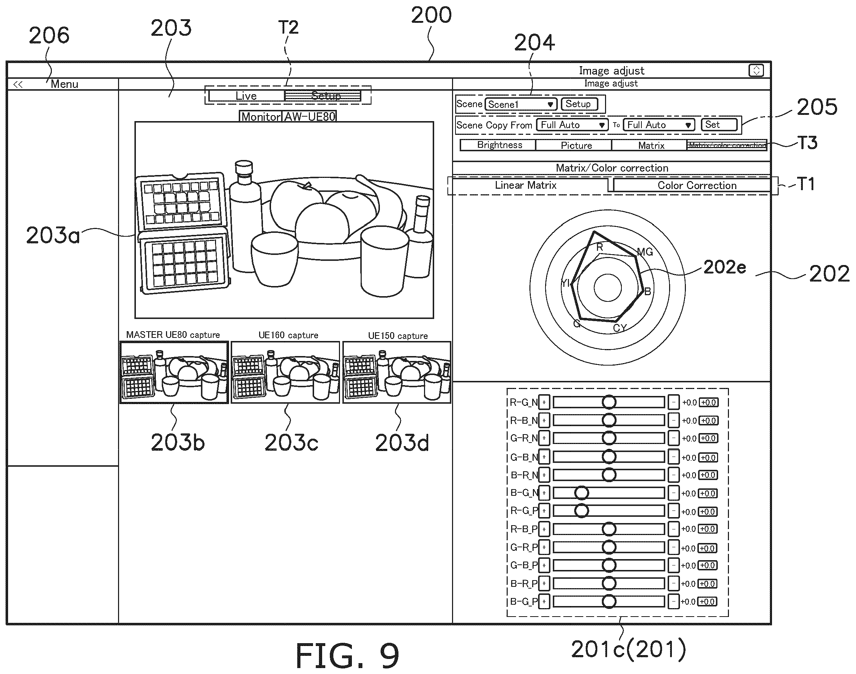

When the third adjustment unit 201c is operated as above, the control unit 19 of the video acquisition device 1 changes the parameter value in response to this operation, and changes the display state of the portion corresponding to the color element whose state has changed due to the change in the parameter value by the operation of the third adjustment unit 201c (step S3). For instance, as described above, if the slider for the parameter with R-G_P is moved in the "+" direction to increase the parameter value of R-G_P, and the slider for the parameter with B-G_N is moved in the "+" direction to increase the parameter value of B-G_N, the vertex of red (R) in the chart 202e moves away from the center of the hexagon, and the display state of the chart 202e changes to what is shown in Fig. 9. That is, the sensitivity of the sensor 11 to red increases. Fig. 9 is a diagram showing an example of the display state of the chart 202e that has been changed by the operation of the third adjustment unit 201c.

When an operation is performed on third adjustment unit 201c to change a parameter value, the color of the video captured by the camera to be adjusted, which is displayed in the area 203a of the preview unit 203, is changed accordingly.

Once the degree of color correction of the video signal is adjusted using the third adjustment unit 201c, the shape of the chart 202e displayed on the chart display unit 202 and/or the video displayed in the area 203a of the preview unit 203 is referred to, and whether or not the color display state of the video is the display state desired by the user is determined (step S4).

If the color display state of the video is what is desired by the user ("Yes" in step S4), the adjustment of the color information is ended, and the video signal adjustment operation proceeds to step S8.

On the other hand, if the color display state of the video is not what is desired by the user ("No" in step S4), the color phase and/or saturation of the color elements that can constitute the video are further adjusted (step S5).

More specifically, first, the input device 53 is used to perform an operation on the portion displayed as "Color Correction" on the first tab T1 of the adjustment-use GUI 200, causing the adjustment unit 201 of the adjustment-use GUI 200 to display the first adjustment unit 201a and the second adjustment unit 201b, and causing the chart display unit 202 to display a chart made up of color element boxes 202a and markers 202b, as shown in Fig. 4. This makes it possible to adjust the color phase and saturation of color elements that can constitute a video, using the adjustment-use GUI 200.

Next, the user adjusts the color phase of a color element by operating one of the sliders of the first adjustment unit 201a using the input device 53. For example, assume that the slider for adjusting the color phase of red (R) of the first adjustment unit 201a is moved in the "+" direction to increase the color phase of red, and the slider for adjusting the color phase of blue (B) is moved in the "-" direction to decrease the color phase of blue.

Also, the user adjusts the saturation of the color elements by using the input device 53 to operate one of the sliders in the second adjustment unit 201b. For example, assume that the slider for adjusting the saturation of red (R) in the second adjustment unit 201b is moved in the "+" direction to increase the saturation of red, and the slider for adjusting the saturation of blue (B) is moved in the "-" direction to decrease the saturation of blue.

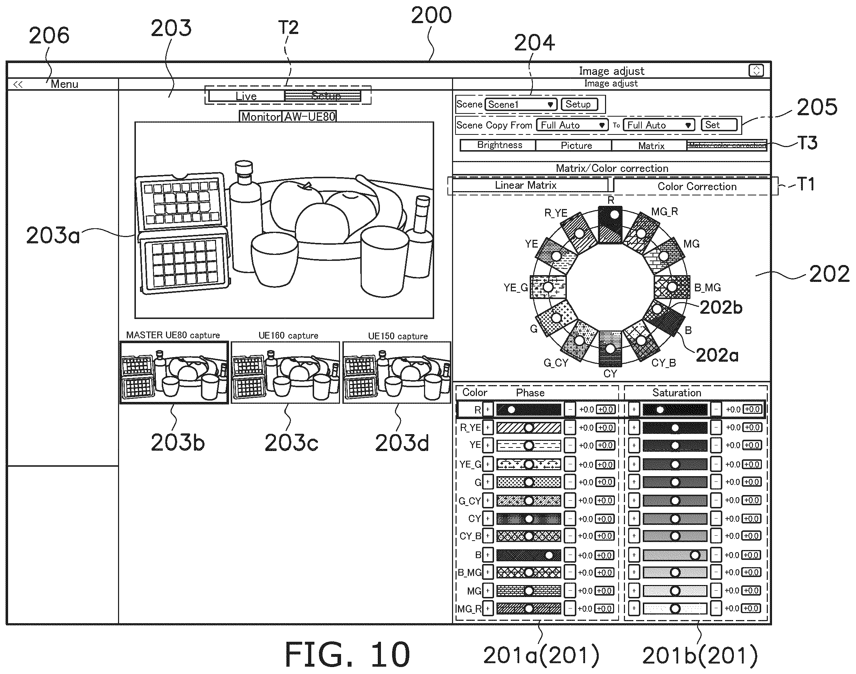

When the first adjustment unit 201a and the second adjustment unit 201b are operated as described above, the control unit 19 of the video acquisition device 1 changes the color phase or saturation of the color element in response to the operation, and changes the position of the marker 202b in the color element box 202a corresponding to the color element whose color phase or saturation has been changed by the operation of the third adjustment unit 201c (step S6). For example, as described above, when the slider for adjusting the color phase of red (R) in the first adjustment unit 201a is moved in the "+" direction to increase the color phase of red, and the slider for adjusting the saturation of red (R) in the second adjustment unit 201b is moved in the "+" direction to increase the saturation of red, as shown in Fig. 10, the marker 202b moves clockwise around the circle in the red (R) color element box 202a and away from the center of the circle. Fig. 10 is a diagram showing an example of the display state of the chart that has been changed by the operation of the first adjustment unit 201a and the second adjustment unit 201b.

Also, when the slider for adjusting the color phase of blue (B) in the first adjustment unit 201a is moved in the "-" direction to decrease the color phase of the blue, and the slider for adjusting the saturation of blue (B) in the second adjustment unit 201b is moved in the "-" direction to decrease the saturation of the blue, as shown in Fig. 10, the marker 202b moves counterclockwise around the circle within the blue (B) color element box 202a and also moves toward the center of the circle.

When an operation is performed on the first adjustment unit 201a and/or the second adjustment unit 201b to change the color phase and/or saturation, the color (color phase and or saturation of a specific color) of the video captured by the camera to be adjusted, which is displayed in the area 203a of the preview unit 203, is changed accordingly.

After the color phase and/or saturation of the color element has been adjusted using the first adjustment unit 201a and/or the second adjustment unit 201b, the position of the marker 202b displayed on the chart display unit 202 and/or the video displayed in the area 203a of the preview unit 203 is referred to, and whether or not the display state of the color of the video is the display state desired by the user is determined (step S7).

If the color display state of the video is what is desired by the user ("Yes" in step S7), the adjustment of the color information is ended, and the video signal adjustment operation proceeds to step S8. On the other hand, if the color display state of the video is not what is desired by the user ("No" in step S7), the adjustment of the color information is restarted from the beginning (that is, the processing goes back to step S2).

After the color information has been adjusted as described above, the control unit 19 of the video acquisition device 1 instructs the image processing unit 17 to reflect the adjusted color information so that the image processing unit 17 will correct the video signal (RGB signal, color difference signal) according to the adjusted color information. More specifically, the control unit 19 instructs the image processing unit 17 to set the linear matrix unit 173 of the image processing unit 17 based on the adjustment value of the parameter representing the degree of correction of the color of the video from the sensor 11. Also, the control unit 19 instructs the image processing unit 17 to set the color correction unit 177 based on the magnitude of the color phase and/or saturation of the color element.

After this, in step S8, the linear matrix unit 173 corrects the RGB signals input from the sensor 11 according to the parameters indicating the degree of correction after adjustment, generates new RGB signals, and outputs the new RGB signals to the signal conversion unit 175. Also, the color correction unit 177 corrects the color difference signals output from the signal conversion unit 175 according to the color phase and saturation of each color element after adjustment, generates new color difference signals, and outputs the new color difference signals to the control unit 19.

Thus, with the video system 100 of the present disclosure, the adjustment-use GUI 200 for adjusting color information related to the color of a video is provided with the first adjustment unit 201a to the third adjustment unit 201c for adjusting the color information, as well as the chart display unit 202 for displaying, in a form of a chart, the states of a plurality of color elements that can constitute a video. When an operation to adjust color information has been performed by the first adjustment unit 201a to the third adjustment unit 201c in this adjustment-use GUI 200, the display state of the portion of the chart displayed on the chart display unit 202 that corresponds to the color element whose state will change as a result of the adjustment of the color information is changed according to the operation of the adjustment unit. In the present disclosure, when the color information is adjusted by the operation of the first adjustment unit 201a to the third adjustment unit 201c, the display state of the chart changes accordingly, so the user can intuitively and visually recognize how the color characteristics of the video (that is, the state of the color elements that can constitute the video) will change after adjustment of the color information by the first adjustment unit 201a to the third adjustment unit 201c.

An embodiment of the present disclosure was described above, but the present disclosure is not limited to or by the above embodiment, and various modifications are possible without departing from the gist of the present disclosure.

The above embodiment involved performing both the adjustment of the degree of color correction of the video acquired by the sensor 11 (adjustment of the linear matrix unit 173) and the adjustment of the color phase or saturation of the color elements that can constitute the video (adjustment of the color correction unit 177). However, this is not the only option, and only the adjustment of the degree of color correction of the video acquired by the sensor 11 may be performed, or only the adjustment of the color phase or saturation (adjustment of the color correction unit 177) may be performed, without adjusting the degree of color correction.

Also, the order in which the color information is adjusted is not limited to adjusting the degree of color correction of the video first and then adjusting the color phase or saturation of the color elements, and the order may instead be reversed, adjusting the degree of color correction of the video after first adjusting the color phase or saturation of the color elements.

In the above embodiment, all of the functions of the image processing unit 17 were realized by circuits (hardware), but this is not the only option. Some or all of the functions of the image processing unit 17 may be realized by software.

### 5. Features of the Present Disclosure

(1) The video signal adjustment method of the present disclosure comprises:
   - displaying an adjustment-use GUI (for example, the adjustment-use GUI 200). The adjustment-use GUI has an adjustment unit (for example, the first adjustment unit 201a to the third adjustment unit 201c) configured to adjust color information related to a color of the video, and a chart display unit (for example, the chart display unit 202) configured to display, in a form of a chart, states of a plurality of color elements that can constitute the video (for example, step S1).
   - adjusting color information by operating the adjustment-use GUI (for example, steps S2 and S5).
   - in a case where an operation has been performed on the adjustment unit, changing a display state of a portion of the chart displayed on the chart display unit that corresponds to the color element whose state changes as a result of the adjustment of the color information (for example, steps S3 and S6).
   - correcting the video signal according to adjusted color information (for example, step S8).
   In the above-mentioned video signal adjustment method, the adjustment-use GUI configured to adjust color information related to the color of a video is provided with an adjustment unit configured to adjust the color information, as well as the display unit configured to display, in the form of a chart, the states of a plurality of color elements that can constitute the video. In a case where an operation to adjust the color information is performed by the adjustment unit in this adjustment-use GUI, the display state of the portion of the chart displayed on the chart display unit that corresponds to the color element whose state changes as a result of the adjustment of the color information is changed in response to the operation of the adjustment unit. With the present disclosure, when the color information is adjusted by the operation of the adjustment unit, the display state of the chart changes accordingly, so the user can intuitively and visually recognize how the color characteristics of the video (that is, the state of the color elements that can constitute the video) change due to the adjustment of the color information by the operation of the adjustment unit.
(2) In the video signal adjustment method of (1) described above, the video signal may be an RGB signal. This allows the RGB signal to be corrected according to the adjustment of the color information.
(3) In the video signal adjustment method of (2) described above, the color information may be information related to the degree of correction of the color of the video acquired by a sensor (for example, the sensor 11). This allows the sensitivity of sensor 11 to be adjusted for a specific color.
(4) In the video signal adjustment method of (3) described above, the chart display unit may display the magnitude of the spectral sensitivity of the sensor in the form of a chart (for example, the chart 202e). This allows the sensitivity of sensor 11 for each color to be directly recognized visually.
(5) In the video signal adjustment method of (4) described above, in a case where the adjustment unit changes information related to the degree of correction of the color of the video, the chart display unit may display which part of the chart changes its display state. This allows a user to directly and visually recognize which colors have changed in spectral sensitivity when the adjustment unit changes the degree of correction of the colors of the video.
(6) In the video signal adjustment method of any of (1) to (5) described above, the video signal may be a color difference signal. This allows the color difference signal to be corrected according to the adjustment of the color information.
(7) In the video signal adjustment method of (6) described above, the color information may be a color phase and/or saturation of a color element represented by the color difference signal. This allows the color difference signal to be corrected so that the video has the desired color tone.
(8) In the video signal adjustment method of (7) described above, the chart displayed on the chart display unit may have a plurality of color element boxes (such as the color element box 202a) corresponding to color elements represented by color difference signals, and markers (such as the marker 202b) that are disposed within the color element boxes and changing its positions in the color element boxes varies with the color phase and saturation. This allows the user to directly and visually recognize how the display state of the color element in the video changes when the color phase and/or saturation of the color element is changed by the adjustment unit.
(9) In the video signal adjustment method of (8) described above, the position of the marker in a first direction (for example, a direction running along a circle) of the color element box may be determined based on the color phase, and the position of the marker in a second direction (for example, a radial direction of the circle) of the color element box may be determined based on the saturation. This allows a user to directly and visually recognize whether the adjustment unit has adjusted the color phase and/or the saturation.
(10) In the video signal adjustment method of (8) or (9) described above, the color element boxes may be colored with the corresponding color elements. In this case, the color phase of the coloring may be changed in a first direction of the color element boxes, and the saturation of the coloring may be changed in a second direction of the color element boxes. This allows the user to directly and visually recognize how each color element of the video is specifically displayed.
(11) In the video signal adjustment method of any of (8) to (10) described above, it may be possible to change the position of the marker in the color element box by user operation. In this case, in a case where the position of the marker is changed by operating the input device, the color phase and/or saturation of the corresponding color element may be changed accordingly, and the display state of the adjustment unit may be changed. This allows the color phase and/or saturation of a color element to be changed by changing the position of the marker, and allows the state of the adjustment unit to be automatically changed accordingly so as to change the state of the adjustment unit to correspond to the changed color phase and/or saturation.
(12) In the video signal adjustment method of any of (8) to (11) described above, the color element boxes may be disposed around a circle. This makes the chart display unit look like a "color palette," which makes it easier to intuitively confirm the adjustment states of the color elements.
(13) The video system of the present invention (for example, the video system 100) is a system configured to adjust a video signal constituting a video. The video system includes a display device (for example, the display device 51), an input device (for example, the input device 53), and a video processing device (for example, the image processing unit 17). The display device is configured to display an adjustment-use GUI (for example, the adjustment-use GUI 200). The adjustment-use GUI has an adjustment unit (for example, the first adjustment unit 201a to the third adjustment unit 201c) configured to adjust color information related to the color of a video, and a chart display unit (for example, the chart display unit 202) configured to display, in the form of a chart, the states of a plurality of color elements that can constitute the video. The input device is configured to accept an operation of adjusting the color information for the adjustment-use GUI. The video processing device is configured to correct the video signal according to the color information adjusted with the input device.

In the video system described above, when an operation is performed on the adjustment unit, the display state of the portion of the chart corresponding to a color element whose state changes as a result of the adjustment of color information is changed according to the operation of the adjustment unit.

In the video system described above, the adjustment-use GUI that is configured to adjust the color information related to the color of a video is provided with the adjustment unit that is configured to adjust the color information, as well the display unit that is configured to display, in the form of a chart, the states of a plurality of color elements that can constitute the video. In a case where an operation of adjusting the color information is performed by the adjustment unit in this adjustment-use GUI, the display state of the portion of the chart displayed on the chart display unit that corresponds to a color element whose state changes as a result of the adjustment of the color information is changed according to the operation of the adjustment unit. In the present disclosure, when the color information is adjusted by the operation of the adjustment unit, the display state of the chart changes accordingly, which allows the user to intuitively and visually recognize how the color characteristics of the video (that is, the state of the color elements that can constitute a video) change due to the adjustment of the color information by the operation of the adjustment unit.

(14) The program of the present disclosure is a program that causes a computer to execute the video signal adjustment method of any of (1) to (12) described above.

### INDUSTRIAL APPLICABILITY

The present invention can be applied to a video signal adjustment method and a video system with which a video signal constituting a video can be adjusted.

### Reference numerals

100: video system
1: video acquisition device
11: sensor
11a: lens
13: pan/tilt unit
15: microphone
17: image processing unit
171: white balance adjustment unit
173: linear matrix unit
175: signal conversion unit
177: color correction unit
19: control unit
191: CPU
193: storage device
195: interface
3: video display device
5: adjustment device
51: display device
53: input device
200: adjustment-use GUI
201: adjustment unit
201a: first adjustment unit
201b: second adjustment unit
201c: third adjustment unit
202: chart display unit
202a, 202c: color element box
202b, 202d: marker
202e: chart
202f: arrow
203: preview unit
203a-203d: areas
204: target scene selection unit
205: scene copy unit
206: menu unit
T1: first tab
T2: second tab
T3: third tab

## Claims

1. A method for adjusting a video signal constituting a video, said method comprising:
displaying an adjustment-use GUI having an adjustment unit configured to adjust color information related to a color of the video, and a chart display unit configured to display, in a form of a chart, respective states of a plurality of color elements that can constitute the video;
adjusting the color information by operating the adjustment-use GUI;
in a case where an operation is performed on the adjustment unit, changing a display state of a portion of the chart corresponding to a color element whose state changes as a result of the adjustment of the color information, in response to the operation of the adjustment unit; and
correcting the video signal according to adjusted color information.

2. The video signal adjustment method according to claim 1, wherein the video signal is an RGB signal.

3. The video signal adjustment method according to claim 2, wherein the color information is information related to the degree of correction of the color of the video acquired by a sensor.

4. The video signal adjustment method according to claim 3, wherein the chart display unit displays the magnitude of the spectral sensitivity of the sensor in the form of a chart.

5. The video signal adjustment method according to claim 4, wherein, in a case where the adjustment unit has changed the information related to the degree of color correction, displaying which part of the chart changes its display state on the chart display unit.

6. The video signal adjustment method according to claim 1, wherein the video signal is a color difference signal.

7. The video signal adjustment method according to claim 6, wherein the color information is color phase and/or saturation of the color element represented by the color difference signal.

8. The video signal adjustment method according to claim 7, wherein the chart has a plurality of color element boxes corresponding to color elements represented by the color difference signal, and a marker disposed in each color element box and changing its position within the color element box depending on the color phase and saturation.

9. The video signal adjustment method according to claim 8, wherein the position of the marker in a first direction of the color element box is determined based on the color phase, and the position of the marker in a second direction of the color element box is determined based on the saturation.

10. The video signal adjustment method according to claim 8, wherein the color element boxes are colored with the corresponding color element, and
in a first direction of the color component box the color phase of the color is changed, and in a second direction the saturation of the color is changed.

11. The video signal adjustment method according to claim 8, wherein the position of the marker within the color element box can be changed by a user operation, and
in a case where the position of the marker is changed by a user operation, the color phase and/or saturation of the corresponding color element is changed to match, and the display state of the adjustment unit is changed.

12. The video signal adjustment method according to claim 8, wherein the plurality of color element boxes are disposed around a circle.

13. A video system configured to adjust a video signal constituting a video, said system comprising:
a display device configured to display an adjustment-use GUI having an adjustment unit configured to adjust color information related to a color of the video, and a chart display unit configured to display, in a form of a chart, states of a plurality of color elements that can constitute the video;
an input device configured to accept an operation to adjust the color information on the adjustment-use GUI; and
an image processing device configured to correct the video signal according to the color information adjusted using the input device,
wherein in a case where an operation is performed on the adjustment unit, a display state of a part of the chart corresponding to a color element whose state changes as a result of the adjustment of the color information is changed in response to the operation on the adjustment unit.

14. A program that causes a computer to execute the video signal adjustment method according to any of claims 1 to 12.
